(19) Europäisches Patentamt
European Patent Office
Office européen des brevets

(11) Veröffentlichungsnummer: **0 111 288 B1**

(12) # EUROPÄISCHE PATENTSCHRIFT

(45) Veröffentlichungstag der Patentschrift: **01.04.87**

(51) Int. Cl.⁴: **C 09 B 62/51**, C 09 B 62/085, D 06 P 3/66, D 06 P 3/10

(21) Anmeldenummer: **83112222.1**

(22) Anmeldetag: **06.12.83**

(54) **Wasserlösliche Naphthylazonaphthol-Verbindungen, Verfahren zu ihrer Herstellung und ihre Verwendung als Farbstoffe.**

(30) Priorität: **09.12.82 DE 3245525**

(43) Veröffentlichungstag der Anmeldung: **20.06.84 Patentblatt 84/25**

(45) Bekanntmachung des Hinweises auf die Patenterteilung: **01.04.87 Patentblatt 87/14**

(84) Benannte Vertragsstaaten: **BE CH DE FR GB IT LI**

(56) Entgegenhaltungen:
**EP - A - 0 040 806**
**JP - A - 45 010 789**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main 80 (DE)**
Erfinder: **Bredereck, Hans-Joachim, Dr., Fürstenbergerstrasse 23, D-6000 Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 111 288 B1

**Beschreibung**

Die Erfindung liegt auf dem technischen Gebiet der faserreaktiven Monoazofarbstoffe.

Aus der japanischen Patentbekanntmachung Sho 4 510 789 ist aus dem Beispiel 8 der Tabelle 2 ein Monoazofarbstoff bekannt, der in 8-Stellung der 3,6-Disulfo-1-naphthol-Kupplungskomponente einen faserreaktiven Monochlortriazinylamino-Rest und als weiteren faserreaktiven Rest eine β-Sulfatoäthylsulfonyl-Gruppe in 5-Stellung der 2-Naphthylamin-Diazokomponente enthält.

Desweiteren sind in der europäischen Patentanmeldungs-Veröffentlichung Nr. 0 040 806A Monoazofarbstoffe in einigen Beispielen beschrieben, die in der Disulfo-1-naphthol-Kupplungskomponente in 8-Stellung einen faserreaktiven Monofluortriazinylamino-Rest und in der sulfosubstituierten 2-Naphthylamin-Diazokomponente eine β-Sulfatoäthylsulfonyl-Gruppe in 6- oder 8-Stellung gebunden enthalten.

Es wurden nunmehr neue, wertvolle und vorteilhafte wasserlösliche Naphthylazonaphthol-Verbindungen gefunden, die der allgemeinen Formel (1)

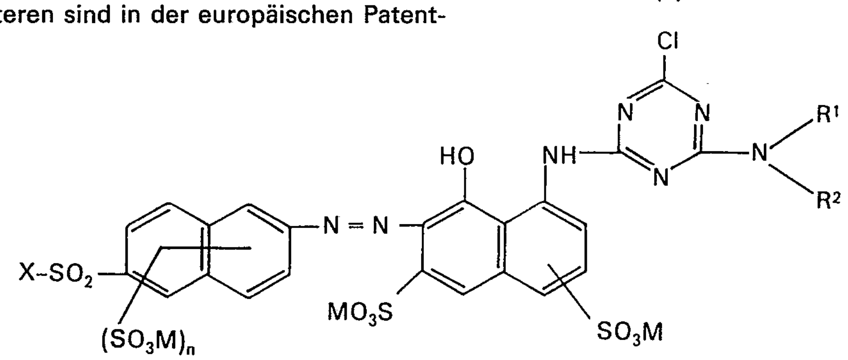

(1)

entsprechen. In dieser bedeuten:

$R^1$ ist ein Wasserstoffatom oder eine Alkylgruppe von 1 bis 4 C-Atomen, wie eine Methyl- oder Äthylgruppe, die durch eine oder zwei, vorzugsweise eine, wasserlöslich-machende Gruppen oder eine Hydroxygruppe substituiert sein kann;

$R^2$ ist ein Wasserstoffatom oder eine Alkylgruppe von 1 bis 6 C-Atomen, vorzugsweise von 1 bis 4 C-Atomen, wie insbesondere Methyl- oder Äthylgruppe, die durch eine oder zwei wasserlöslich-machende Gruppen oder durch eine Hydroxygruppe substituiert sein kann, oder ist der Phenyl- oder ein Naphthylrest, wobei diese Phenyl- und Naphthylreste noch durch einen, zwei oder drei, vorzugsweise einen oder zwei, Substituenten aus der Gruppe Sulfo, Carboxy, Halogen, wie Chlor und Brom, Alkyl von 1 bis 4 C-Atomen, Alkoxy von 1 bis 4 C-Atomen, Hydroxy und Carbalkoxy von 2 bis 5 C-Atomen substituiert sein können, oder ist ein Cycloalkylrest, wie Cyclohexylrest, und

$R^1$ und $R^2$ können zueinander gleiche oder voneinander verschiedene Bedeutungen besitzen;

X ist die Vinylgruppe oder eine β-Thiosulfatoäthyl-Gruppe (entsprechend der allgemeinen Formel $-CH_2-CH_2-S-SO_3M$ mit M der nachstehend angegebenen Bedeutung), die β-Chloräthyl-Gruppe oder bevorzugt eine β-Sulfatoäthyl-Gruppe (entsprechend der allgemeinen Formel $-CH_2-CH_2-OSO_3M$ mit M der nachstehend angegebenen Bedeutung);

n steht für die Zahl Null, 1 oder 2 (wobei n gleich Null Wasserstoff bedeutet);

die im Aminonaphtholrest freistehende Gruppe $-SO_3M$ mit M der nachstehenden Bedeutung ist in meta-Stellung oder in para-Stellung zur Aminogruppe an den Naphthalinkern gebunden;

M ist ein Wasserstoffatom oder ein Alkalimetall oder das Äquivalent eines Metalls der 2. oder 3. Hauptgruppe des Periodischen Systems, vorzugsweise des Calciums.

Die für $R^1$ und $R^2$ erwähnte wasserlöslich-machenden Gruppen sind beispielsweise Phosphatogruppen (entsprechend der allgemeinen Formel $-OPO_3M_2$ mit M der obengenannten Bedeutung), Sulfatogruppen (entsprechend der allgemeinen Formel $-OSO_3M$ mit M der obengenannten Bedeutung) und bevorzugt Sulfogruppen (entsprechend der allgemeinen Formel $-SO_3M$ mit M der obengenannten Bedeutung) und Carboxygruppen (entsprechend der allgemeinen Formel $-COOM$ mit M der obengenannten Bedeutung).

Die erfindungsgemässen Azoverbindungen können in Form ihrer freien Säure und bevorzugt in Form ihrer Salze, insbesondere neutralen Salze, vorliegen; als Salze sind insbesondere die Alkalimetall- und Erdalkalimetallsalze zu nennen, so beispielsweise die Natrium-, Kalium- und Calciumsalze. Die neuen Verbindungen finden bevorzugt in Form dieser Salze ihre Verwendung zum Färben oder Bedrucken von hydroxy- und/oder carbonamidgruppenhaltigem Material, vorzugsweise Fasermaterial.

Die vorliegende Erfindung betrifft weiterhin Verfahren zur Herstellung dieser erfindungsgemässen Azoverbindungen der allgemeinen Formel (1). Sie sind dadurch gekennzeichnet, dass man die Diazoniumverbindung eines 2-Naphthylamins der allgemeinen Formel (2)

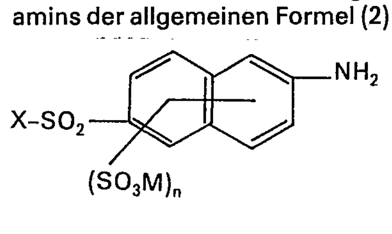

in welcher M, X und n die obengenannten Bedeutungen haben, mit einer Kupplungskomponente der allgemeinen Formel (3)

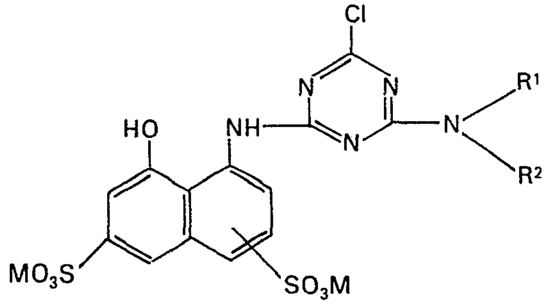

(3)

in welcher M, $R^1$ und $R^2$ die obengenannten Bedeutungen haben und die freistehende Sulfogruppe in meta- oder para-Stellung zur Aminogruppe an den Naphthalinkern gebunden ist, kuppelt, oder dass man eine Azoverbindung der allgemeinen Formel (4)

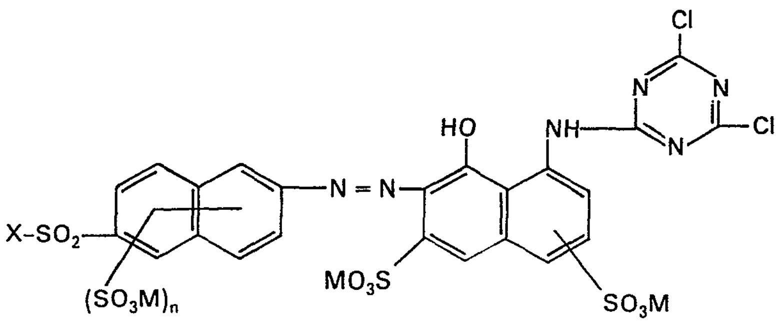

(4)

in welcher M, X und n die obengenannten Bedeutungen haben und die freistehende Sulfogruppe im Aminonaphtholrest in meta- oder para-Stellung zur Aminogruppe steht, mit einem Amin der allgemeinen Formel (5)

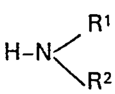

(5)

in welcher $R^1$ und $R^2$ die obengenannten Bedeutungen haben, umsetzt.

Die Diazotierung der Naphthylamine der allgemeinen Formel (2) wird analog bekannten und an und für sich üblichen Verfahrensweisen durchgeführt, so vorzugsweise in wässrigem, saurem Medium mittels salpetriger Säure bei einer Temperatur zwischen -5°C und +15°C und bevorzugt bei einem pH-Wert zwischen 0,5 und 2.

Ebenso kann die nachfolgende Kupplungsreaktion mit der Verbindung der allgemeinen Formel (3) analog bekannten Methoden der Kupplung von diazotierten Anilinverbindungen oder Naphthylaminverbindungen mit Acylamino-naphtholsulfonsäuren erfolgen, wobei zur Vermeidung der Schädigung der faserreaktiven Gruppe alkalische Bedingungen vermieden werden sollen. Bevorzugt erfolgt die Kupplungsreaktion in einem pH-Bereich zwischen 4 und 7 und bei einer Temperatur zwischen -5°C und +30°C in wässrigem Medium.

Die Umsetzung der Azoverbindung der allgemeinen Formel (4) mit einer Aminoverbindung der allgemeinen Formel (5) kann ebenso analog bekannten und an und für sich üblichen Verfahrensweisen der Umsetzung von Aminoverbindungen mit einer Dichlortriazinylamino-naphthol-Verbindung durchgeführt werden, so beispielsweise in wässrigem Medium bei einer Temperatur zwischen 5 und 70°C, vorzugsweise zwischen 20 und 40°C, und bei einem pH-Wert zwischen 3 und 7,5, vorzugsweise zwischen 4 und 7.

Die Herstellung der Ausgangsverbindungen der allgemeinen Formel (3) und der allgemeinen Formel (4) erfolgt ebenfalls analog bekannten Verfahrensweisen, wie beispielsweise in der deutschen Offenlegungsschrift Nr. 2 949 034 beschrieben.

Die Abscheidung und Isolierung der erfindungsgemäss hergestellten Monoazoverbindungen der allgemeinen Formel (1) aus den Syntheselösungen kann nach allgemein bekannten Methoden erfolgen, so beispielsweise durch Ausfällen aus dem Reaktionsmedium mittels Elektrolyten, wie beispielsweise Natriumchlorid oder Kaliumchlorid, oder durch Eindampfen oder Reaktionslösung, beispielsweise durch Sprühtrocknung, wobei dieser Reaktionslösung eine Puffersubstanz, wie beispielsweise ein Gemisch aus Mono- und Dinatriumphosphat, zugefügt werden kann. Gegebenenfalls können diese Syntheselösungen auch, gegebenenfalls nach Zusatz einer Puffersubstanz und nach eventuellem Konzentrieren, direkt als Flüssigpräparation der färberischen Verwendung zugeführt werden.

Die erfindungsgemässen Monoazoverbindungen besitzen wertvolle Farbstoffeigenschaften und weisen infolge des Restes des Vinylsulfontyps und des Chlortriazinylrestes faserreaktive Eigenschaften auf. Sie werden zum Färben von

hydroxy- und/oder carbonamidgruppenhaltigen Materialien, beispielsweise in Form von Flächengebilden, wie Papier und Leder, oder von Folien, wie aus Polyamid, oder in der Masse, wie beispielsweise von Polyamid und Polyurethan, insbesondere aber von diesen Materialien in Faserform, verwendet.

Gegenstand der vorliegenden Erfindung ist deshalb auch die Verwendung der erfindungsgemässen Azoverbindungen der allgemeinen Formel (1) zum Färben dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern, wie Garnen, Wickelkörpern, Geweben und Gewirken.

Hydroxygruppenhaltige Materialien sind natürliche, regenerierte oder synthetische hydroxygruppenhaltige Materialien, wie beispielsweise Cellulosefasermaterialien oder Celluloseregeneratmaterialien und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische Polyamide, wie Polyamid-6,6, Polyamid-6, Polyamid-11 und Polyamid-4, und Polyurethane, insbesondere in Form der Fasern, oder natürliche Polyamide, beispielsweise Wolle und andere Tierhaare, Seide und Leder.

Die erfindungsgemässen Azoverbindungen lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren.

So erhält man mit ihnen auf hydroxygruppenhaltigen Materialien, wie Cellulosefasern, insbesondere nach dem Ausziehverfahren unter Verwendung von verschiedensten säurebindenden Mitteln und gegebenenfalls unter Zugabe von neutralen Salzen, wie Natriumchlorid oder Natriumsulfat, bereits bei Färbetemperaturen zwischen 60 und 80°C sehr gute Farbausbeuten. Im allgemeinen färbt man bei einer Temperatur zwischen 60 und 98°C, gegebenenfalls in Gegenwart von üblichen Färbereihilfsmitteln im wässrigen Bad. Die Färbungen können aber auch bei höherer Temperatur, wie bei Siedetemperatur des Färbebades oder in geschlossenen Färbeapparaturen bei Temperaturen bis zu 115°C, ausgeführt werden. Ebenso werden nach üblichen Klotzverfahren und üblichen Druckverfahren auf Cellulosefasermaterialien farbstarke Färbungen und Drucke erhalten.

Die mit den erfindungsgemässen Azoverbindungen erhältlichen Färbungen und Drucke zeichnen sich durch gute Echtheitseigenschaften aus, so beispielsweise durch eine gute Lichtechtheit und durch gute Nassechtheiten, wie insbesondere gute Wasch-, Walk-, Wasser-, Meerwasser-, Überfärbe- und saure sowie alkalische Schweissechtheiten, und ebenso durch gute Bügel- und Reibechtheiten.

Des weiteren können die erfindungsgemässen Farbstoffe der Formel (1) zum Färben von Wolle Verwendung finden. Auch lässt sich filzfrei oder filzarm ausgerüstete Wolle (vergl. bspw. H. Rath, Lehrbuch der Textilchemie, Springer-Verlag, 3. Auflage (1972), S. 295–299), insbesondere nach Ausrüstung nach dem sogenannten Hercosett-Verfahren (J. Soc. Dyers and Colourists, 1972, 93–99, und 1975, 33–44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad, insbesondere bei einem pH-Wert zwischen 3,5 und 5,5, unter Kontrolle des pH-Wertes dem Ausziehprozess unterworfen wird und gegen Ende der Färbezeit der pH-Wert in den neutralen und gegebenenfalls schwach alkalischen Bereich bis zu einem pH von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100°C durchgeführt, jedoch können sie auch in geschlossenen Färbeapparaturen bei Temperaturen bis zu 106°C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemässen Verbindungen der allgemeinen Formel (1) ist sehr hoch. Sie liefern auf den Fasermaterialien, insbesondere beim reaktiven Färben von Wolle, sehr klare, gelbstichig bis blaustichig rote Färbungen. Bei Anwendungen von Färbetemperaturen von 100 bis 106°C ist eine hohe Baderschöpfung festzustellen.

Die nachstehenden Beispiele dienen zur Erläuterung der Erfindung. Die darin genannten Teile sind Gewichtsteile, die Prozentangaben stellen Gewichtsprozente dar, sofern nichts anderes vermerkt. Gewichtsteile beziehen sich zu Volumenteilen wie Kilogramm zu Liter. Die in den Beispielen formelmässig beschriebenen Verbindungen sind in Form der freien Säuren angegeben; im allgemeinen werden sie in Form ihrer Natrium- oder Kaliumsalze hergestelt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium-oder Kaliumsalze, in die Synthese eingesetzt werden.

Beispiel 1

In eine Mischung aus 130 Teilen Wasser und 40 Teilen Eis werden zuerst 19,4 Teile Cyanurchlorid, dann 31,9 Teile 1-Amino-8-naphthol-3,6-disulfonsäure unter Rühren eingetragen; der Ansatz wird noch 2 bis 3 Stunden bei einer Temperatur zwischen etwa 10 und 12°C und bei einem pH-Wert zwischen 2 und 2,5 nachgerührt. Sodann gibt man die neutrale Lösung von 17,3 Teilen Anilin-3-sulfonsäure in 100 Teilen Wasser hinzu und rührt bei einem pH-Wert zwischen 5 und 5,5 zunächst eine Stunde bei 30 bis 35°C, sodann weitere 30 Minuten bei 50 bis 55°C weiter.

Das erhaltene sekundäre Kondensationsprodukt wird mit dem Diazoniumsalz aus 33,1 Teilen 6-(β-Sulfatoäthylsulfonyl)-2-aminonaphthalin gekuppelt. Hierfür diazotiert man die genannte Menge des Aminonaphthalins bei ca. 0-5°C in etwa 200 Teilen einer wässrigen Lösung auf übliche Weise. Nach Zerstörung überschüssiger salpetriger Säure durch Amidosulfonsäure, wie üblich, gibt man diese Suspension des Diazoniumsalzes zu der obengenannten Lösung des sekundären Kondensationsproduktes, stellt mittels Natriumbicarbonat einen pH-Wert zwischen 6,0 und 6,5 ein und rührt den Kupplungsansatz noch etwa 2 Stunden bei einer Temperatur von etwa 15°C innerhalb dieses pH-Bereiches, erwärmt anschliessend auf 50°C, setzt 4 Teile Kieselgur hinzu und filtriert. Das Filtrat wird mit 1,4 Teilen Dinatriumphosphat versetzt und sprühgetrocknet.

Es wird ein rotes, elektrolythaltiges (vorwiegend Natriumchloridhaltiges) Pulver des Natriumsalzes der Verbindung der Formel

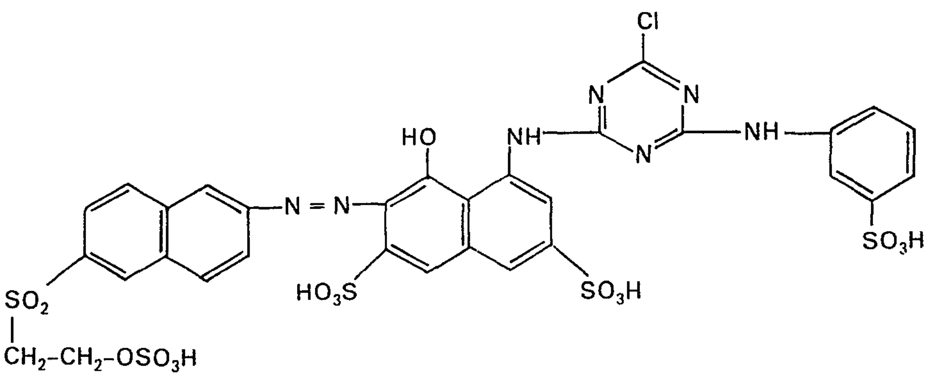

erhalten. Diese erfindungsgemässe Azoverbindung besitzt sehr gute Farbstoffeigenschaften; sie färbt die in der Beschreibung genannten Materialien, insbesondere Wolle aus saurem Bad oder Cellulosefasermaterialien in Gegenwart von säurebindenden Mitteln nach den in der Technik üblichen Applikations- und Fixiermethoden für faserreaktive Farbstoffe, in klaren roten Tönen mit sehr gutem Farbaufbau und hohem Fixiergrad. Die Färbungen besitzen sehr gute Nassechtheiten, wie insbesondere eine ausgezeichnete Waschechtheit und gute Wasser-, Meerwasser- und Schweissechtheiten sowie eine gute Reibechtheit.

Beispiele 2 bis 13

In den nachfolgenden Tabellenbeispielen sind weitere erfindungsgemässe Monoazoverbindungen mit Hilfe ihrer Komponenten durch die allgemeine Formel (1a)

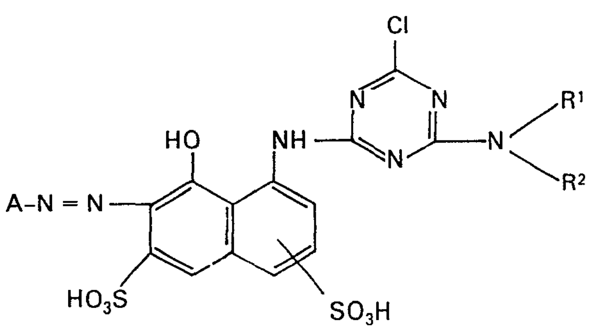

(1a)

beschrieben. Sie lassen sich in erfindungsgemässer Weise, beispielsweise analog einem der obigen Ausführungsbeispiele, aus ihren Komponenten (einer Aminoverbindung der allgemeinen Formel A-$NH_2$ entsprechend dem Aminonaphthalin der allgemeinen Formel (2) als Diazokomponente, der 1-Amino-8-naphthol-3,6- oder -4,6-disulfonsäure (die in dem jeweiligen Tabellenbeispiel durch die Stellung der einen Sulfogruppe zur Aminogruppe charakterisiert ist), dem Cyanurchlorid und einer Aminoverbindung entsprechend der allgemeinen Formel (5)) herstellen.

Diese erfindungsgemässen Azoverbindungen besitzen ebenfalls sehr gute faserreaktive Farbstoffeigenschaften mit sehr guten anwendungstechnischen Eigenschaften und liefern Färbungen und Drucke auf den in der Beschreibung genannten Fasermaterialien, insbesondere auf Wolle und auf Cellulosefasermaterialien, nach den für faserreaktive Farbstoffe üblichen Applikations- und Fixiermethoden mit hohen Farbstärken und guten Echtheiten in der in dem jeweiligen Tabellenbeispiel angegebenen Nuance auf beispielsweise Baumwolle.

Monoazoverbindung der allgemeinen Formel (1a)

| Bsp. | Formelrest A | Stellung von $-SO_3H$ | Formelrest $R^1$ | Formelrest $R^2$ | Nuance auf Baumwolle |
|---|---|---|---|---|---|
| 2 | 6-(β-Sulfatoäthylsulfonyl)-2-naphthyl | meta | Wasserstoff | 4-Sulfophenyl | rot |
| 3 | 6-(β-Sulfatoäthylsulfonyl)-2-naphthyl | para | Wasserstoff | 4-Carboxy-phenyl | gelbstichig rot |
| 4 | 6-(β-Sulfatoäthylsulfonyl)-2-naphthyl | meta | Wasserstoff | 2-Methoxy-5-sulfophenyl | rot |
| 5 | 6-(β-Sulfatoäthylsulfonyl)-2-naphthyl | meta | Wasserstoff | Cyclohexyl | rot |
| 6 | 6-(β-Sulfatoäthylsulfonyl)-1-sulfo-2-naphthyl | para | Wasserstoff | 2,5-Disulfo-phenyl | gelbstichig rot |
| 7 | 6-(β-Sulfatoäthylsulfonyl)-1-sulfo-2-naphthyl | meta | Wasserstoff | Wasserstoff | rot |
| 8 | 6-(β-Sulfatoäthylsulfonyl)-1-sulfo-2-naphthyl | meta | Wasserstoff | 4-Methyl-6-sulfophenyl | rot |
| 9 | 6-(β-Sulfatoäthylsulfonyl)-1-sulfo-2-naphthyl | para | Wasserstoff | 2-Carboxy-phenyl | gelbstichig rot |
| 10 | 6-(β-Sulfatoäthylsulfonyl)-1-sulfo-2-naphthyl | meta | Wasserstoff | 3-Sulfo-phenyl | rot |
| 11 | 6-(β-Sulfatoäthylsulfonyl)-1-sulfo-2-naphthyl | para | Wasserstoff | 3-Sulfo-phenyl | gelbstichig rot |
| 12 | 6-(β-Sulfatoäthylsulfonyl)-1-sulfo-2-naphthyl | meta | Wasserstoff | 2-Chlor-phenyl | rot |
| 13 | 6-(β-Sulfatoäthylsulfonyl)-1-sulfo-2-naphthyl | meta | Methyl | Phenyl | rot |

## Patentansprüche

1. Wasserlösliche Azoverbindungen entsprechend der allgemeinen Formel (1)

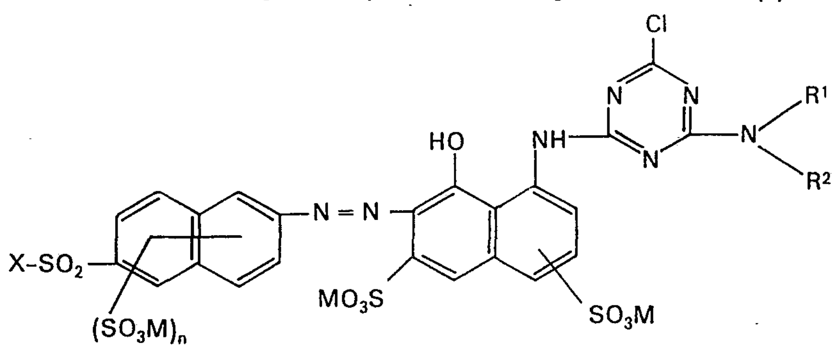

(1)

in welcher bedeuten:

$R^1$ ist ein Wasserstoffatom oder eine Alkylgruppe von 1 bis 4 C-Atomen, die durch eine oder zwei wasserlöslich-machende Gruppen oder eine Hydroxygruppe substituiert sein kann;

$R^2$ ist ein Wasserstoffatom oder eine Alkylgruppe von 1 bis 6 C-Atomen, die durch eine oder zwei wasserlöslich-machende Gruppen oder eine Hydroxygruppe substituiert sein kann, oder ist der Phenylrest oder ein Naphthylrest, wobei diese Phenyl- und Naphthylreste noch durch 1, 2 oder 3 Substituenten aus der Gruppe Sulfo, Carboxy, Halogen, Alkyl von 1 bis 4 C-Atomen, Alkoxy von 1 bis 4 C-Atomen, Hydroxy und Carbalkoxy von 2 bis 5 C-Atomen substituiert sein können, oder ist ein Cycloalkylrest;

X ist die Vinylgruppe oder eine β-Thiosulfatoäthyl-, β-Chloräthyl- oder β-Sulfatoäthyl-Gruppe;

n steht für die Zahl Null, 1 oder 2;

die im Aminonaphtholrest freistehende Gruppe $-SO_3M$ mit M der nachstehenden Bedeutung ist in meta-Stellung oder in para-Stellung zur Aminogruppe an den Naphthalinkern gebunden;

M ist ein Wasserstoffatom oder ein Alkalimetall oder das Äquivalent eines Metalls der 2. oder 3. Hauptgruppe des Periodischen Systems.

2. Azoverbindungen nach Anspruch 1, dadurch gekennzeichnet, dass n für die Zahl Null steht.

3. Azoverbindungen nach Anspruch 1, dadurch gekennzeichnet, dass n die Zahl 1 bedeutet

und diese Sulfogruppe an den Naphthalinkern in 1-Stellung gebunden ist.

4. Azoverbindungen nach Anspruch 1 der allgemeinen Formel

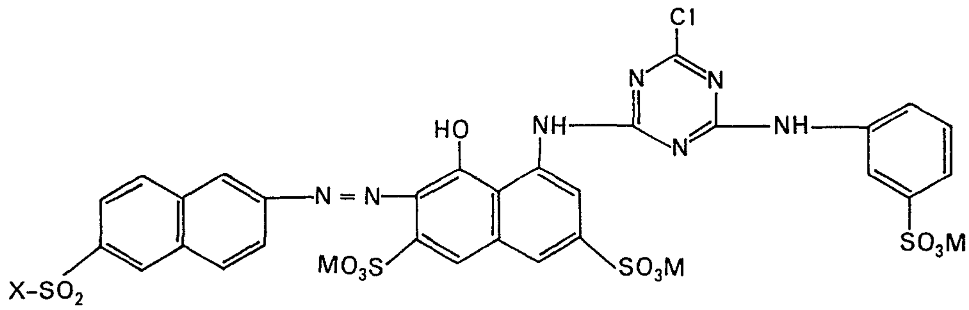

in welchen M und X die in Anspruch 1 genannten Bedeutungen haben.

5. Azoverbindungen nach einem der Ansprüche 1 bis 4, dadurch gekennzeichnet, dass X die Vinylgruppe oder eine β-Sulfatoäthyl-Gruppe bedeutet.

6. Azoverbindungen nach einem der Ansprüche 1 bis 5, dadurch gekennzeichnet, dass M für ein Wasserstoffatom oder ein Alkalimetallatom oder das Äquivalent des Calciums steht.

7. Verfahren zur Herstellung der in Anspruch 1 genannten und definierten Azoverbindungen der allgemeinen Formel (1), dadurch gekennzeichnet, dass man die Diazoniumverbindung eines 2-Naphthylamins der allgemeinen Formel (2)

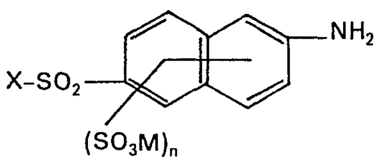

(2)

in welcher M, X und n die in Anspruch 1 genannten Bedeutungen haben, mit einer Kupplungskomponente der allgemeinen Formel (3)

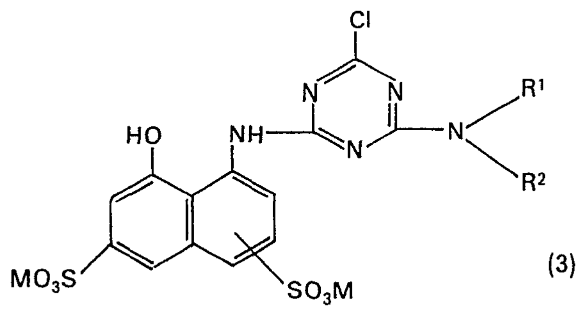

(3)

in welcher M, $R^1$ und $R^2$ die in Anspruch 1 genannten Bedeutungen haben und in welcher die freistehende Sulfogruppe in meta- oder para-Stellung zur Aminogruppe an den Naphthalinkern gebunden ist, kuppelt, oder dass man eine Azoverbindung der allgemeinen Formel (4)

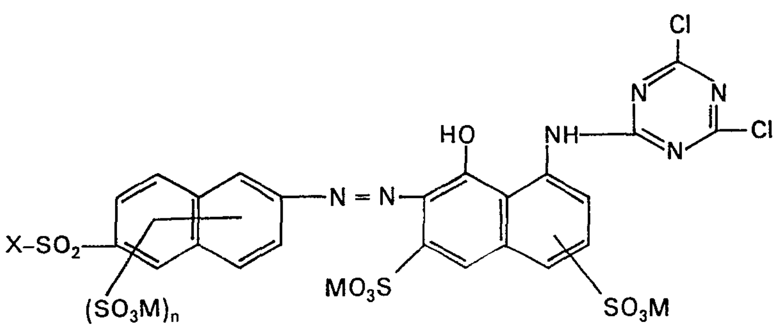

(4)

in welcher M, X und n die in Anspruch 1 genannten Bedeutungen haben und die freistehende Sulfogruppe im Aminonaphtholrest in meta- oder para-Stellung zur Aminogruppe steht, mit einem Amin der allgemeinen Formel (5)

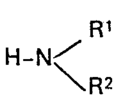

(5)

in welcher $R^1$ und $R^2$ die in Anspruch 1 genannten Bedeutungen haben, umsetzt.

8. Verwendung der in Anspruch 1 genannten und definierten Azoverbindungen der allgemeinen Formel (1) zum Färben (einschliesslich Bedrucken) von hydroxy- und/oder carbonamidgruppenhaltigen Materialien, insbesondere Fasermaterialien.

**Claims**

1. Water-soluble azo compounds corresponding to the general formula (1)

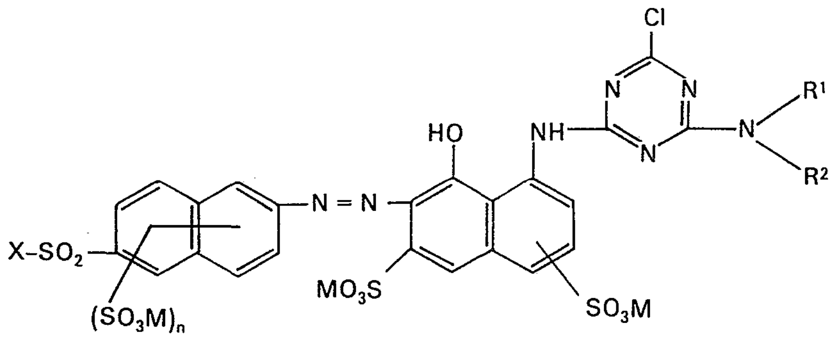

(1)

in which

$R^1$ is a hydrogen atom or an alkyl group of 1 to 4 C-atoms which can be substituted by one or two watersolubilizing groups or a hydroxy group;

$R^2$ is a hydrogen atom or an alkyl group of 1 to 6 C-atoms which can be substituted by one or two watersolubilizing groups or a hydroxy group, or is the phenyl radical or a naphthyl radical, it being possible for these phenyl and naphthyl radicals also to be substituted by 1, 2 or 3 substituents from the group comprising sulfo, carboxy, halogen, alkyl of 1 to 4 C-atoms, alkoxy of 1 to 4 C-atoms, hydroxy and carbalkoxy of 2 to 5 C-atoms, or is a cycloalkyl radical;

X is the vinyl group or a β-thiosulfatoethyl, β-chloroethyl or β-sulfatoethyl group;

n denotes the number zero, 1 or 2;

the group $-SO_3M$, where M as the meaning given below, of no fixed position in the aminonaphthol radical is bonded to the naphthalene nucleus in the metaposition relative to the amino group;

M is a hydrogen atom or an alkali metal or the equivalent of a metal of the 2nd or 3rd Main Group of the Periodic Table.

2. Azo compounds according to claim 1, characterized by that n represents the number zero.

3. Azo compounds according to claim 1, characterized by that n denotes the number 1 and that this sulfo group is bonded to the naphthalene nucleus in the 1-position.

4. Azo compounds according to claim 1, of the general formula

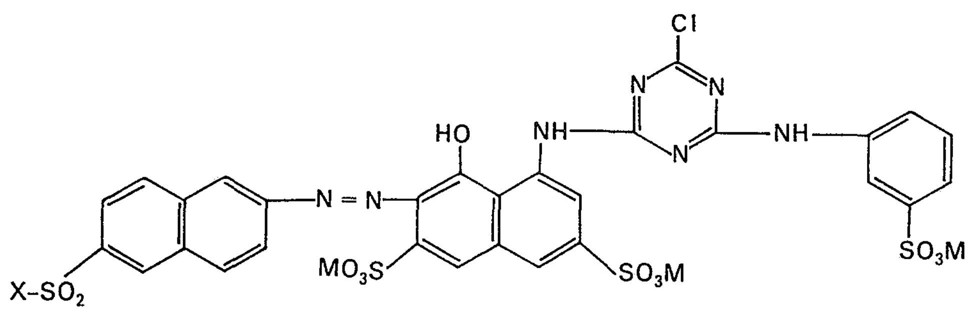

in which M and X have the meanings given in claim 1.

5. Azo compounds according to any of claims 1 to 4, characterized by that X denotes the vinyl group or a β-sulfatoethyl group.

6. Azo compounds according to any of claims 1 to 5, characterized by that M represents a hydrogen atom or an alkali metal atom or the equivalent of calcium.

7. Process for the preparation of azo compounds of the formula (1), mentioned and defined in claim 1, characterized by that the diazonium compound of a 2-naphthylamine of the general formula (2)

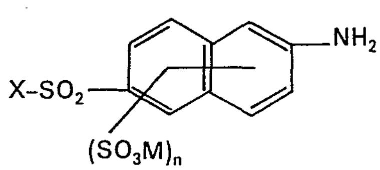

(2)

in which M, X and n have the meanings given in claim 1, is coupled with a coupling component of the general formula (3)

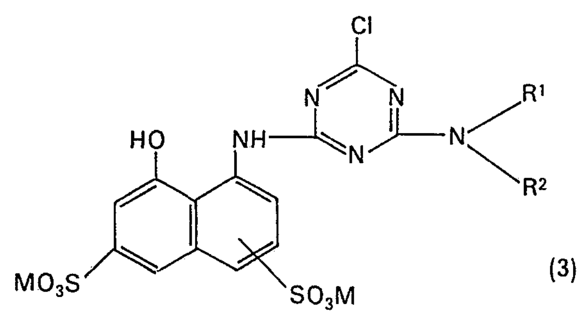

(3)

in which M, $R^1$ and $R^2$ have the meanings as given in claim 1 and the sulfo group with no fixed position is bonded to the naphthalene nucleus in the meta- or para-position relative to the amine group, or that an azo compound of the general formula (4)

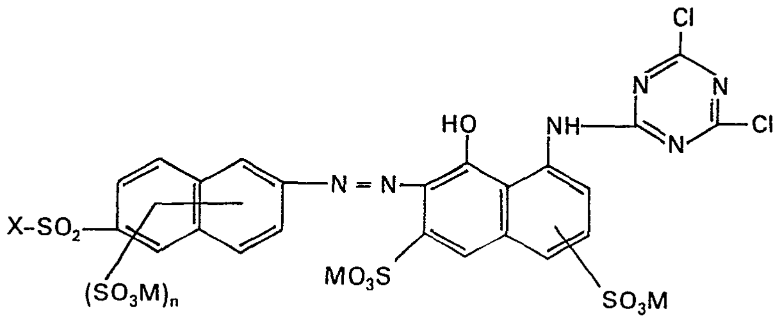

(4)

in which M, X and n have the meanings as given in claim 1 and the sulfo group of no fixed position in the aminonaphthol radical is in the meta- or paraposition relative to the amino group, is reacted with an amine of the general formula (5)

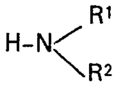

(5)

in which $R^1$ and $R^2$ have the meanings as given in claim 1.

8. The use of the azo compounds of the formula (1) mentioned and defined in claim 1, for coloring (including printing) materials, in particular fiber materials, containing hydroxy groups and/or carboxamide groups.

## Revendications

1. Composés azoïques hydrosolubles qui répondent à la formule 1:

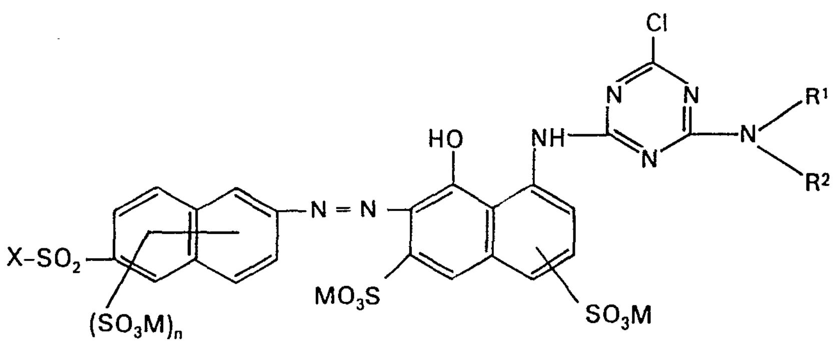

(1)

dans laquelle:

$R^1$ représente un atome d'hydrogène ou un radical alkyle en $C_1$-$C_4$ qui peut porter un ou deux radicaux hydrosolubilisants ou un radical hydroxy,

$R^2$ représente: un atome d'hydrogène, un radical alkyle en $C_1$-$C_6$ qui peut porter un ou deux radicaux hydrosolubilisants ou un radical hydroxy, un radical phényle ou un radical naphtyle, ces radicaux phényle et naphtyle pouvant en outre porter chacun un, deux ou trois substituants pris dans l'ensemble constitué par les radicaux sulfo, carboxy, halogéno, alkyles en $C_1$-$C_4$, alcoxy en $C_1$-$C_4$, hydroxy et alcoxycarbonyles en $C_2$-$C_5$, ou un radical cycloalkyle,

X représente un radical vinyle, thiosulfato-2 éthyle, chloro-2 éthyle ou sulfato-2 éthyle,

n représente l'un des 0, 1 et 2,

le radical $-SO_3M$ dont la position n'est pas indiquée avec précision sur le radical de l'aminonaphtol et dans lequel M a la signification indiquée ci-dessous se trouve, sur le noyau naphtalénique, en position méta ou en position para relativement au radical amino, et

M représente un atome d'hydrogène, un métal alcalin ou l'équivalent d'un métal du deuxième ou du troisième groupe principal de la classification périodique.

2. Composés azoïques selon la revendication 1 caractérisés en ce que n est égal à 0.

3. Composés azoïques selon la revendication 1 caractérisés en ce que n est égal à 1 et en ce que le radical sulfo correspondant est en position 1 sur le noyau naphtalénique.

4. Composés azoïques selon la revendication 1 qui répondent à la formule générale suivante:

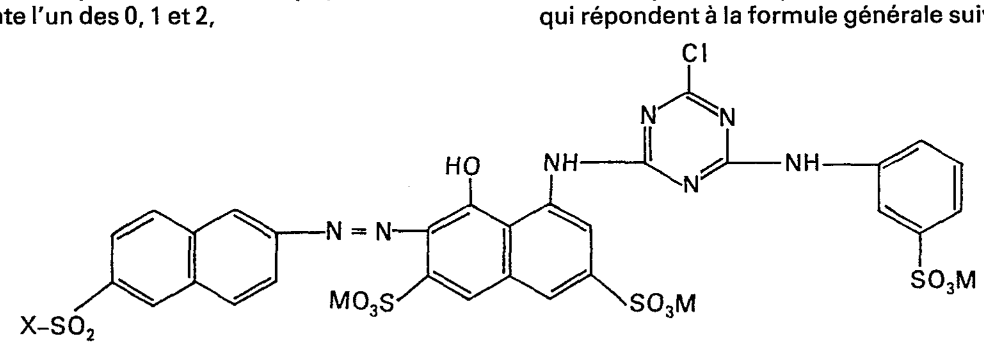

dans laquelle M et X ont les significations données à la revendication 1.

5. Composés azoïques selon l'une quelconque des revendications 1 à 4, caractérisés en ce que X représente un radical vinyle ou un radical sulfato-2 éthyle.

6. Composés azoïques selon l'une quelconque des revendications 1 à 5, caractérisés en ce que M représente un atome d'hydrogène, un atome de métal alcalin ou l'équivalent du calcium.

7. Procédé de préparation des composés azoïques répondant à la formule générale 1 qui a été représentée et définie à la revendication 1, procédé caractérisé en ce que: on copule le diazoïque d'une (naphtyl-2)-amine répondant à la formule générale 2:

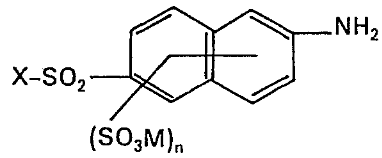

(2)

dans laquelle M, X et n ont les significations données à la revendication 1,

avec un copulant répondant à la formule générale 3:

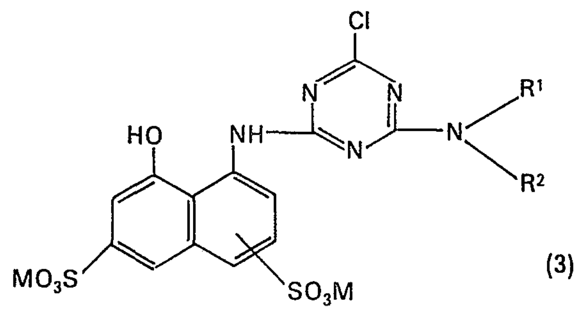

(3)

dans laquelle M, $R^1$ et $R^2$ ont les significations données à la revendication 1 et dans laquelle le radical sulfo dont la position n'est pas représentée avec précision se trouve, sur le noyau naphtalénique, en position méta ou en position para relativement au radical amino, on fait réagir un composé azoïque répondant à la formule générale 4:

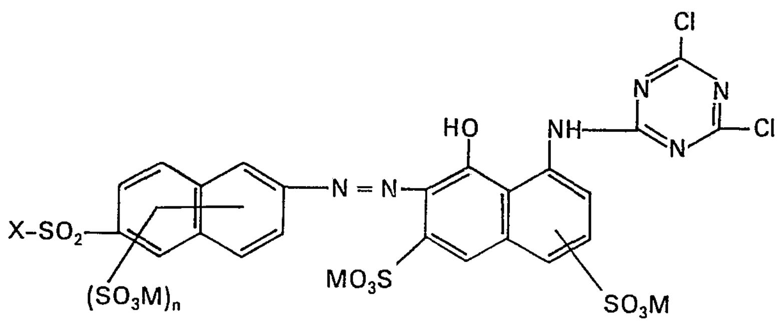

(4)

dans laquelle M, X et n ont les significations données à la revendication 1 et dans laquelle le radical sulfo dont la position n'est pas représentée avec précision se trouve, sur le radical de l'aminonaphtol, en position méta ou en position para relativement au radical amino, avec une amine répondant à la formule générale 5:

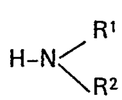

(5)

dans laquelle $R^1$ et $R^2$ ont les significations données à la revendication 1.

8. Application des composés azoïques répondant à la formule générale 1 qui a été représentée et définie à la revendication 1, pour la teinture (y compris l'impression) de matières, plus particulièrement de matières fibreuses, contenant des radicaux hydroxy et/ou des radicaux carbamoyles.